# EUROPEAN PATENT SPECIFICATION

(11) **EP 4 402 884 B1**
(45) Date of publication and mention of the grant of the patent: **31.12.2025**
(21) Application number: 21815447.4
(22) Date of filing: 17.11.2021
(51) Int. Cl.: H04L 67/12, H04L 9/40, H04W 12/00, H04L 9/08

(54) **METHOD AND SYSTEM FOR CARRYING OUT MEASUREMENT CAMPAIGNS BY MEANS OF MOTOR VEHICLES USING A CENTRALLY-CONTROLLED CAMPAIGN-SPECIFIC END-TO-END ENCRYPTION OF THE MEASUREMENT DATA**
VERFAHREN UND SYSTEM ZUR DURCHFÜHRUNG VON MESSKAMPAGNEN MITTELS KRAFTFAHRZEUGEN MIT ZENTRAL GESTEUERTER KAMPAGNENSPEZIFISCHER END-TO-END-VERSCHLÜSSELUNG DER MESSDATEN
PROCÉDÉ ET SYSTÈME POUR LA RÉALISATION DE CAMPAGNES DE MESURE AU MOYEN DE VÉHICULES À MOTEUR UTILISANT UN CHIFFRAGE DE BOUT EN BOUT DES DONNÉES DE MESURE SPÉCIFIQUE À LA CAMPAGNE ET CONTRÔLÉ DE MANIÈRE CENTRALISÉE

(43) Date of publication of application: 24.07.2024
(73) Proprietor: CARIAD SE, 38440 Wolfsburg (DE)
(72) Inventor: SCHIMMEL, Oliver, 81375 München (DE)
(74) Representative: Hofstetter, Schurack & Partner
(86) International application number: PCT/EP2021/081966
(87) International publication number: WO 2023/088548

(56) References cited:
- VDTÜV: "VdTÜV Position: Data Protection, IT Security & Compliance as a Basis for New Business Models in Digital Connected Mobility", 13 January 2017 (2017-01-13), XP002807141, Retrieved from the Internet <URL:https://www.sicherer-kranken-und-behindertentransfer.de/vdtuev-en/news_policy_statements/position-data-protection-it-security-compliance-for-new-business-models-in-digitally-connected-mobility?context=9db418e6022a4ce5b9c951e72fc2daaa> [retrieved on 20220721]
- VERBAND DER TÜV: "Requirements for the telematics interface in vehiclesReliable access to vehicle data and to data generated by vehicles", 23 January 2017 (2017-01-23), XP002807142, Retrieved from the Internet <URL:https://www.sicherer-kranken-und-behindertentransfer.de/vdtuev-en/dok_view?oid=662438> [retrieved on 20220722]
- RICHARD GOEBELT, DIRECTOR AUTOMOTIVE & MOBILITY, TÜV ASSOCIATION (VDTÜV): "Comments on Guidelines 1/2020 on processing personal data in the context of connectedvehicles and mobility related applications", 11 March 2020 (2020-03-11), XP002807143, Retrieved from the Internet <URL:https://edpb.europa.eu/sites/default/files/webform/public_consultation_reply/vdtuv_comments_on_guidelines_1-2020_european_data_protection_board_11-3-20.pdf> [retrieved on 20220720]

## Description

The invention relates to a method and a system for performing measurement campaigns or data collection using motor vehicles. The invention also includes a motor vehicle adapted for the system and a stationary computer system for generating a cryptographic key.

Carrying out a measurement campaign using motor vehicles is described, for example, in DE 10 2017 206 073 A1. The measured data is collected centrally in a mass data storage, from where it can then be made available for analysis. Nowadays, such a mass data storage is preferably not provided by the same central computer system that also controls the measurement campaign, but is rented, for example, from a service provider as a so-called cloud storage. However, this can result in this service provider gaining insight into measurement data, which could allow undesired conclusions to be drawn about motor vehicle-related or even personal data.

It is known from DE 11 2018 000 779 T5 that data from a data source computer can be sent together with an ID, but in this case the ID is laminated on the basis of a random number. Only within a data collection computer is the laminated ID then converted back into an ID token. This does not provide any protection against the evaluation of the associated measurement data.

It is known from EP 3 148 152 A1 that control units of motor vehicles can be equipped with a cryptographic master key that can be used for communication of the respective control unit with a stationary central computer system. The measurement data from different measurement campaigns can be encrypted with respective vehicle-specific keys or with a master key that applies to all motor vehicles and then stored in a mass data storage. However, when this mass data storage is accessed, the measurement data from each measurement campaign can then be decrypted, so that a campaign operator of a single measurement campaign may have access to more measurement data than he is entitled to according to the measurement campaign he initiated.

The document "VdTÜV Position: Data Protection, IT Security & Compliance as a Basis for New Business Models in Digital Connected Mobility", 13 October 2017 (2017-10-13), XP002807141, Verband der TÜV: "Requirements for the telematics interface in vehicles Reliable access to vehicle data and to data generated by vehicles", 23 January 2017 (2017-01-23), and the document by Richard Goebelt, Director Automotive & Mobility, TÜV Association (VdTÜV): "Comments on Guidelines 1/2020 on processing personal data in the context of connected vehicles and mobility related applications", 11 March 2020 (2020-03-11), each discloses a security architecture in connected vehicles.

The invention is based on the task of being able to make measurement data from a single measurement campaign accessible in isolation or separately, even if several measurement campaigns are carried out simultaneously in a fleet of motor vehicles.

The task is solved by the objects of the independent patent claims. Advantageous further developments of the invention are described by the dependent patent claims, the following description and the figures.

As one solution, the invention comprises a method for performing measurement campaigns by means of motor vehicles, wherein a respective measurement campaign comprises that configuration data for the measurement campaign is received or generated by a stationary central computer system, which configuration data specifies at least one measurement quantity or measurement variable to be measured and/or at least one trigger condition for triggering a respective measurement of measurement data regarding the at least one measurement variable. The configuration data is transmitted to the motor vehicles by means of a respective predetermined forward channel, and the measurement data that is measured by the motor vehicles according to the configuration data is then received from the motor vehicles via a predetermined return channel. For example, a measurement campaign may be commissioned or ordered by a campaign operator. The campaign operator can either feed the configuration data into the central computer system itself, for example via an API (application programming interface), or the configuration data can be generated for the campaign operator by the central computer system in response to information provided by the campaign operator. The measurement campaign can generally provide that at least one predefined measurement variable, for example a temperature and/or a rotational speed and/or a specific state of a control unit of the motor vehicles, is specified and a trigger or start signal can be defined by the trigger conditions, wherein the trigger conditions define at which time or in which situation a measurement is to be carried out for the respective measured variable, resulting in corresponding measured values or measured signals, i.e. generally measured data of the respective measurement variable or measurement quantity. For example, it can be specified as a trigger condition that the respective motor vehicle should be in a predetermined geographical region and/or that a certain weather should be present, for example rain. Measurement campaigns of this type are known from the prior art, as described in the introduction of this description.

With respect to the motor vehicles, the central computer system represents a so-called backend or backend server, i.e., a stationary computer or stationary computer network that communicates with the motor vehicles via communication links. Such communication links can, for example, be based on Internet connections and/or mobile radio connections. Communication channels can be created, with the channel leading from the central computer system to the respective motor vehicle which being referred to here as a forward channel. Accordingly, a return channel can be formed that is leading from the respective motor vehicle to the central computer system for receiving the measurement data from the motor vehicles via the communication links.

As is known from the prior art, a respective channel can be cryptographically encrypted or protected in whole (end-to-end) or in part (not fully end-to-end), for example by means of the TLS (Transport Layer Security) protocol, which is known per se.

In order to be able to keep the measurement data of different measurement campaigns separate in terms of data security, the method comprises a central key derivation module (central key generation module) that is being operated by the central computer system . The central key derivation module generates a unique campaign-individual or campaign-specific cryptographic key for the respective measurement campaign. The key derivation module can be implemented, for example, as a software or as a software module or program module (KDF - Key Derivation Function). It can be executed accordingly on at least one microprocessor of the central computer system. The term "computer system" here refers in particular in each case to a processor device or processor circuit with one or more microprocessors, in which it can be assumed that data integrity or data security exists within the boundaries of the processor device, while security measures for transmitting and/or authenticating data are necessary outside the boundaries of the processor device. For example, a computer system may be defined by a runtime environment or a virtual machine or an operating system kernel and the user applications executed thereon, thus representing an executable or running operating system. A computer system may also comprise several operating systems that are operated, for example, in a common data network that is protected by, for example, a firewall, such that every system inside the firewall belongs to the "computer system". The respective key derivation module can be arranged to generate a cryptographic key from input data, which will be described in more detail. A key derivation module may derive or generate a cryptographic key based, for example, on a hash function, for example SHA256.

In the motor vehicles, control software is also provided which is executed in a local computer system of the respective motor vehicle and which is set up to execute measurements for measurement data according to the configuration data of the respective measurement campaign and to encrypt the measured measurement data in the local computer system by means of a predetermined symmetrical encryption method using the campaign-specific cryptographic key and to send the measurement data to the central computer system in such encrypted form. The local computer system may be implemented in a motor vehicle, for example, using a control unit or by a network of control units. Each of the motor vehicles that is to participate in the measurement campaigns is thus equipped with the specific control software that is operated in the local computer system of the respective motor vehicle. The control software can perform the actual data collection (measurement and forwarding) as a function of the configuration data of the respective measurement campaign in the manner known per se, i.e., for example, it can control at least one sensor that is connected to or coupled with the local computer system, and/or the control software can record or read out a sensor signal. However, measurement data may also represent, for example, an internal state of a local electronic control unit and/or software executed by it, for example an error state of a driver assistance software. The measurement data may additionally or alternatively comprise user inputs received via the local computer system. However, the control software is now additionally set up to symmetrically encrypt the measurement data on site within the local computer system (i.e. before the measurement data leaves the local computer system or the region where data integrity is ensured) using the campaign-specific cryptographic key, so that only encrypted measurement data is sent from the local computer system, which can only be decrypted by the central computer system, which also stores the campaign-specific cryptographic key. The use of a symmetrical encryption method has the advantage that no runtime losses are caused by the computational complexity of the encryption method, as would be the case with asymmetrical encryption methods.

The central computer system receives the encrypted measurement data via the return channel and decrypts the encrypted measurement data using the campaign-specific cryptographic key, and the decrypted measurement data is made available at a data interface for a predefined campaign operator. Thus, in an advantageous manner, the decrypted measurement data is only available to the campaign operator that is responsible for the associated measurement campaign. Before that and until they are made available to the campaign operator, the measurement data can be kept encrypted for each individual campaign.

The invention has the advantage that the measurement data from several measurement campaigns can be collected or merged in the central computer system without unintentionally creating the possibility of making the measurement data from several different measurement campaigns accessible without authorization, as the collected measurement data are all encrypted with a different, campaign-specific cryptographic key. In addition, it is also ensured for the entire return channel up to the central computer system, irrespective of the transmission technology used and/or irrespective of the number of intermediate transmission components (for example a mass storage or bulk storage or cloud storage of a third-party provider), the measurement data will only be accessible in decrypted by the campaign operator in the central computer system.

The invention also includes further embodiments by which additional advantages are obtained.

The following describes how the campaign-specific cryptographic key can be generated centrally in the central computer system and distributed from there to the motor vehicles.

As the campaign-specific cryptographic key may be generated, fully or in part, on a campaign-specific data record, which is unique to the respective measurement campaign, e.g. a campaign ID. This ensures that a campaign-specific key is generated for each campaign, which is different from any cryptographic key of any other measurement campaign. By using the campaign-specific data set in the measurement campaign, in particular a unique campaign **ID,** it is possible to control from the central computer system how the key is generated, so that the complexity and/or security and/or uniqueness of the campaign-specific cryptographic key for symmetric encryption can be controlled or ensured within the central computer system by appropriate preparation of the campaign-specific data set.

A further development comprises that the campaign-specific cryptographic key is generated by means of a random number generator. In this variant, therefore, a uniform key can be provided by the central computer system for all motor vehicles in the measurement campaign. In addition, the generation of the key cannot be interfered with by a third party because it takes place within the central computer system from which the measurement campaign also originates and/or from which the configuration data for the measurement campaign is also sent out.

In one further development, the key derivation module also uses vehicle-specific additional data when generating the campaign-specific cryptographic key, which makes the key vehicle-specific. This advantageously results in both a vehicle-specific and a campaign-specific cryptographic key. There can be a respective individual campaign-specific cryptographic key for each motor vehicle or a single campaign-specific cryptographic key that is generated from all vehicle-specific additional data together. Thus, the central computer system can make a key campaign-specific by means of the campaign-specific data record, while in addition by each motor vehicle this key is also made vehicle-specific by means of the vehicle-specific additional data. Vehicle-specific additional data can be or contain, for example, an **ID** of the local computer system (e.g., a MAC address). In this way, the central computer system on the one hand and each local computer system in each motor vehicle on the other hand can implement or provide individual end-to-end encryption for communication, in particular for the transmission of measurement data. A further development comprises that the vehicle-specific additional data is generated by means of a random number generator (RNG). The additional data on the vehicle side is thus not only vehicle-specific, but also campaign-specific, since the motor vehicle uses a different random number or random value for each measurement campaign when deriving the campaign-specific cryptographic key. This ensures that the cryptographic key is designed individually for each campaign, both on the part of the central computer system by means of the data record in the configuration data and on the part of the vehicle by means of the random number generator. Even if a third party, for example, listens in to or reads the forward channel, it is still not possible for him to decrypt the campaign-specific encrypted measurement data or to derive the key for this.

A further development comprises that the configuration data of the respective measurement campaign are additionally encrypted by means of a campaign-independent encryption for exchanging them between the central computer system and the local computer system of the respective motor vehicle. Corresponding encryption key data are stored in both the central computer system and in the respective local computer system. For example, a symmetric cryptographic key or an asymmetric cryptographic key pair may be used for providing encryption key data. This encrypted forward channel makes it possible to transmit the campaign-specific cryptographic key generated centrally in the central computer system to each motor vehicle in the measurement campaign without third parties being able to read or copy the key.

A further development comprises that the return channel includes intermediate storage in a cloud mass storage facility. Since the measurement data itself is transmitted in encrypted form in the measurement campaign using symmetric encryption, the return channel can now also include intermediate storage at a service provider, i.e. in particular in a mass storage facility in a cloud, i.e. a computer network and/or storage network that can be accessed via the Internet, so that both the motor vehicles and the central computer system can access the mass storage facility. Even if several campaign operators access the cloud mass storage, they can only access and decrypt measurement data for their own measurement campaign, for which they hold the campaign-specific cryptographic key.

As a further solution, the invention comprises a system for performing measurement campaigns by means of motor vehicles, comprising: a stationary central computer system and respective control software for a respective local computer system of the motor vehicles. The system is adapted to perform an embodiment of the method according to the invention. Such a system may be implemented or installed in a fleet of vehicles by installing the control software in each of the motor vehicles of the fleet of vehicles. Then the respective motor vehicle is able to communicate with the central computer system in encrypted form on a campaign-specific basis in order to generate measurement data as part of a measurement campaign or several measurement campaigns and to transmit this data in (symmetrically) encrypted form to the central computer system.

Such a motor vehicle equipped with the control software is also part of the invention, i.e. as a further solution the invention comprises a motor vehicle for the system according to the invention, wherein in a local computer system of the motor vehicle a control software is provided which is set up to be to be executed in the local computer system and to carry out measurements of measurement data controlled by configuration data of a respective measurement campaign and to encrypt the measured measurement data in the local computer system using a predetermined symmetrical encryption method by means of a campaign-specific cryptographic key and to transmit the encrypted measurement data to a central computer system external to the vehicle. The motor vehicle is designed in particular as a motor vehicle, for example a passenger car or truck, or as a passenger bus, although these are only exemplary embodiments. The local computer system can be implemented, for example, by a control unit of the motor vehicle or a network of several control units of the motor vehicle. The measurement data can be generated in the manner described by reading out sensors and/or states of vehicle components of the motor vehicle, for example operating states such as are available or signaled in a CAN bus (CAN - Controller Area Network). The central computer system and/or the local computer system may be based on a processor device as described below.

As a further solution, the invention comprises the stationary central computer system for carrying out measurement campaigns by means of motor vehicles, the central computer system comprising a processor device, wherein the processor device is adapted to
- operate a central key derivation module, which key derivation module generates a campaign-specific cryptographic key for a respective measurement campaign in the described manner,
- transmit configuration data of the respective measurement campaign to the motor vehicles by means of a predetermined forward channel, and to receive the measurement data measured by the motor vehicles in accordance with the configuration data from the motor vehicles via a predetermined return channel, wherein the configuration data comprises the respective campaign-specific cryptographic key for the respective motor vehicle.

The received measurement data are encrypted by means of the described symmetric encryption method using the campaign-specific cryptographic key and the processor device is adapted to adapted to decrypt the encrypted measurement data by means of the described symmetric encryption method using the campaign-specific cryptographic key.

For this purpose, the processor device can have at least one microprocessor and/or at least one microcontroller and/or at least one FPGA (field programmable gate array) and/or at least one DSP (digital signal processor). Furthermore, the processor device may have program code which, when executed by the processor device, is set up to execute the method steps of the stationary central computer system or the local computer system of the respective motor vehicle. The program code may be stored in a data memory of the processor device. The cryptographic processes described (e.g. key generation, decryption of the configuration data, encryption of the campaign key, encryption of the data, signing of the data) can be additionally protected by a hardware security module (HSM).

The invention also encompasses combinations of the features of the further embodiments described. Thus, the invention also encompasses realizations each having a combination of the features of several of the further embodiments described, provided that the further embodiments have not been described as mutually exclusive.

Implementation examples of the invention are described below. For this purpose shows:
- Fig. 1: a schematic representation of a system using a vehicle-generated key generation module; and
- Fig. 2: a schematic representation of an embodiment of the system according to the invention.

The examples explained below are preferred embodiments of the invention. In the examples, the described components of the embodiments each represent individual features of the invention that are to be considered independently of one another, each of which also independently further the invention. Therefore, the disclosure is intended to include combinations of the features of the embodiments other than those shown. Furthermore, the described embodiments may also be supplemented by further of the already described features of the invention.

In the figures, identical reference signs denote elements with identical functions.

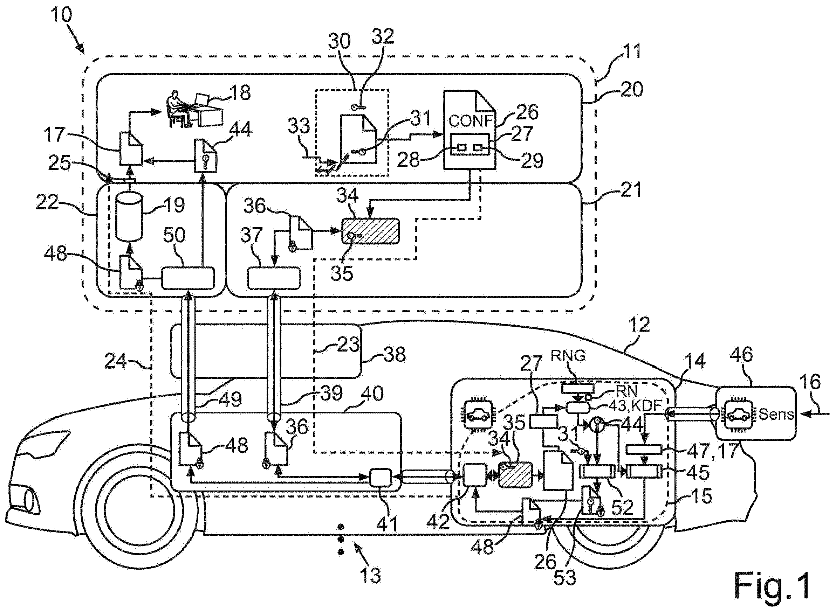

Fig. 1 shows a system 10 having a central computer system 11 through which a data collection campaign or measurement campaign can be conducted using a plurality of motor vehicles 12 while the motor vehicles 12 are moving or driving on, for example, a road network in a region. Ellipsis points 13 ("...") indicate that more than the single motor vehicle 12 shown in Fig. 1 may be involved in the measurement campaign. A local computer system 14, e.g. based on at least one electronic control unit, can be provided in the motor vehicle 12, and on the local computer system 14 a control software 15 can be provided or operated in each case in order to carry out measurements 16 for a respective measurement campaign carried out as part of the system 10.

The campaign data or measurement data 17 obtained in this way can be made available to a campaign operator 18, for example a software developer for software of the at least one motor vehicle 12 or other vehicles. In this case, it is ensured that the measurement data 17 are only made available to an authorized campaign operator 18 in unencrypted form, i.e. without cryptographic encryption, even if several measurement campaigns are carried out simultaneously or in parallel by means of the system 10 and the measurement data of all measurement campaigns are stored in a common mass memory 19.

This can be achieved in the system 10 according to Fig. 1 as follows:
A management software 20 can be operated in the stationary central computer system 11, through which one or more measurement campaigns can be administered or managed.

In Fig. 1, a single measurement campaign is illustrated for the sake of clarity; further measurement campaigns can be executed or carried out in parallel in the same way. Furthermore, a transmit interface 21 and a receive interface 22 can be operated in the central computer system 11. Via the transmitting interface 21, a forward channel 23 can run from the central computer system 11 to the respective local computer system 14 in order to transmit data from, for example, the management software 20 to the control software 15. Via the receive interface 22, a return channel 24 may be provided from the respective local computer system 14 or the respective control software 15 to, for example, the management software 20 or, in general, to a data interface 25 at which the measurement data 17 may be provided to the campaign operator 18.

Configuration data 26 for configuring or controlling the respective measurement campaign can be generated by the management software 20, which can in particular comprise a campaign-specific data set 27, which can comprise, for example, a campaign ID 28 and/or initialization data 29 for generating a campaign-specific cryptographic key. In the central computer system 11, for example, a cryptographic key pair 30 for asymmetric cryptographic encryption can be generated by the management software 20, which can also be performed on a campaign-specific basis, so that a public key 31 and a private key 32 are available for an asymmetric encryption method. The public key 31 can be signed as authentic by means of a predetermined signature 33, as is known per se for cryptographic signature procedures. The public key 31 can, for example, be provided as part of the configuration data 26.

The configuration data 26 can be transmitted via the link channel 23 to the local computer system 14 of the respective motor vehicle 12, where they can then be made available to the control software 15. For this purpose, it can be provided that at least a section of the link channel 23 is encrypted by means of a campaign-independent encryption 34, for which corresponding encryption key data 35 can be stored both in the central computer system 11 and in the control software 15. The campaign-independent encryption, which can be arranged or provided, for example, in the transmission interface 21 then results in encrypted campaign data 36, which can be transmitted by an order management module 37, i.e., software for sending data collection orders or measurement orders to individual motor vehicles 12, via, for example, the Internet and/or a mobile radio network to a communication interface 38 of the motor vehicle 12. A data connection 39 encrypted by means of TLS (Transport Layer Security) can be used for this purpose. In the motor vehicle 12, a gateway 40 can be provided for providing the communication interface 38, for example, but this gateway 40 can be designed as a separate computer system for which the encrypted configuration data 36 can still be kept inaccessible or encrypted. Within the motor vehicle 12, for example, a master software or master 41 may be provided in the gateway 40 for distributing or assigning individual measurement jobs to the control units / local computer systems 14 present in the motor vehicle 12. The control software 15 may accordingly operate an agent software or client software or agent 42 for receiving a measurement job intended for the control unit 14. The encrypted campaign data 36 received in this manner may be decrypted in the manner described by the campaign-independent encryption 34 using the encryption key data 35, so that the configuration data 26 is provided unencrypted and thus readable or usable in the control software 15. The campaign-specific data set 27 may be provided to a local key derivation function module 43 (KDF), for example, which may be software capable of generating or generating a campaign-specific cryptographic key 44 for a symmetric encryption method 45 based on a HASH function, for example. The key derivation module 43 can additionally receive random data, for example a random value or a random number RN or random digits, from a random number generator RNG and also use them in generating the key 44.

For example, the communication or a communication between the master 41 and the agent 42 may be via a secure communication architecture within the motor vehicle 12, such as an Ethernet with encrypted packets, also known as sSOA (secured Service Oriented Architecture).

The sensor data 47 received from at least one sensor 46 during the respective measurement 16 then represent the actual measurement data 17 desired or required for the measurement campaign, which can be encrypted by means of the symmetric encryption method 45 on the basis of the key 44, resulting in encrypted measurement data 48. These can be transmitted via the return channel using, for example, the agent 42 and the master 41 via, for example, the gateway 40 and/or the communication interface 38 to the receiving interface 22 via, for example, a mobile radio connection and/or Internet connection, which in turn can be operated as an encrypted connection 49 in the manner described, for example using TLS. The local computer system 14 can be connected to the respective control unit of a sensor 46 via a secure onboard communication known per se (for example SecOC - Secure Onboard Communication), as this can be implemented, for example, by means of an encrypted and/or signed CAN bus (CAN - Controller Area Network). In the case of secure onboard communication (SecOC), it may be that only signing is used, but not encryption. The cryptographic signature can be used to prove the authenticity of the transmitted data.

For example, a receiving module, a so-called data ingestor 50 (ingest), can be operated in the receiving interface 22, which can store the received encrypted measurement data 48 in the mass memory 19.

The central computer system 11 represents a so-called backend, which provides additional software functionality for the at least one motor vehicle 12, in this example in particular the management software 20.

In order that the encrypted measurement data 48 can now be decrypted from the mass storage device 19 at the data interface 25, the campaign-specific cryptographic key 44 is still required. If this has been created in the vehicle, it must first be transmitted unreadably to the central computer system 11 by means of encryption. The public key 31 can be used for this purpose, which can be transmitted to the local computer system, for example together with the configuration data 26 or separately, via the forward channel 23, so that the key 44 can be encrypted in the local computer system by means of an asymmetric encryption process by the control software 15, so that encrypted key data 53 are available which have been encrypted by means of the public key 31.

The encrypted key data 53 of the key 44 may, for example, be transmitted in the same return channel 24 as the encrypted measurement data 48. The ingestor 50 can then forward the encrypted key data, for example, to the management software 20, where the encrypted key data 53 can be decrypted by means of the private key 32 available there, so that decrypted key data of the key 44 are available and can be provided, for example, at the data interface 25 and/or to the campaign operator 18. The campaign-specific key is thus encrypted with the public key from the back end (central computer system) in the vehicle - if it has to be derived from the motor vehicle. The associated private key in the back end can then be used to decrypt the symmetric/campaign-specific key in the back end 25.

An example of a symmetric encryption method 45 is AES (Advanced Encryption Standard), which is known per se, and an example of an asymmetric encryption method 52, AE, is ECC (Elliptic-Curve Cryptography).

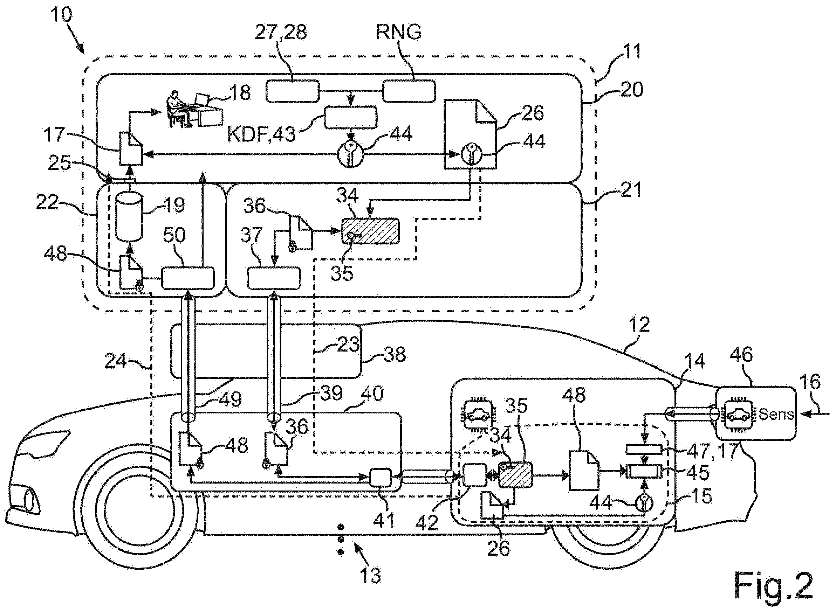

Fig. 2 illustrates an embodiment of the system 10 in which the campaign-dependent cryptographic key 44 can be generated in the central computer system 11, for example in the management software 20. For this purpose, the described key derivation module 43 can be operated with the campaign-dependent data set 27, for example the campaign ID 28, and in one embodiment or further embodiment also the random number generator RNG. The key 44 is thus directly generated or available in the central computer system for decryption of the encrypted measurement data 48. To transmit the key 44 to the control software 15 in the local computer system 14 in the at least one motor vehicle 12 (e.g. in at least one electronic control unit), the campaign-independent encryption 34 with the key data 35 may be used for encryption to transmit the encrypted campaign data 36, which may include the key 44 in encrypted form, to the control software 15 via the forward channel 23, where the encrypted configuration data 36 can be decrypted by means of the campaign-independent encryption 34 by means of the key data 35, so that the decrypted configuration data 26 containing the key 44 is available for the symmetric encryption method 45.

The other components of the system 10 according to Fig. 2 may correspond to the components according to the system 10 according to Fig. 1, and therefore reference is made to the description of Fig. 1 for their explanation.

The idea is to generate at least one campaign-dependent key when creating a data collection campaign and to distribute it securely to the vehicle and the "source control device" together with the campaign's configuration. This source control device (the local computer system that collects the data and prepares it for output) can encrypt and/or sign using this key(s). Decryption and signature verification can only be performed by the campaign manager.

The latest development strategies ("Data Driven Development") call for functions that start in the backend (central computer system) (definition of collection measurement campaigns), continue with the rolling out of data from backend to vehicle (especially campaign configurations, control signals), the execution of data collection activities and control signals in the vehicle, the routing of such measurement data back to the backend, and finally the secure further processing of this data in the backend (data analytics (data analysis), data enrichment (data supplementation), to name just a few examples). If security considerations are carried out for the back end and the vehicle in isolation, conflicting requirements may arise with regard to the protection goals. This can only be eliminated by a holistic end-to-end security analysis and a security concept derived from it. This has been implemented with the present idea.

A concrete example is measurement data for development purposes, which is collected in the vehicle but used in the backend for verification/validation, corner case detection (generally: post-processing). According to current attacker considerations for non-authorized data access to such data, authenticity and confidentiality can be secured in the vehicle up to the gateway. Between the vehicle gateway and the backend (ingest), TLS can be used to secure communication. What is no longer taken into account is that no cryptographic measures for authenticity or confidentiality exist from the data ingest (TLS is terminated here, in-vehicle encryption/signing can no longer be checked in the backend).

Due to data protection requirements alone, it now possible for access authorizations to measurement data to be set up on a campaign-specific basis.

If one assumes the realistic case that the described data ingest, i.e. the data sink, is not in the management of the same entity (not brand/corporate, but external, e.g. Microsoft ^{®} or Amazon ^{®} or another cloud service provider), there is no way for campaign management to ensure the authenticity/confidentiality of the measurement data from the creator (in the motor vehicle) to the backend (SOK, secure onboard communication, and SSOA, secure service oriented architecture, usually terminated in the motor vehicle, TLS in the ingestor).

The danger now is that in the single vehicle, the need for authenticity/confidentiality per risk assessment/acceptance may be eliminated (since, for example, an attack does not scale because it is local), but the impact inside the backend is much higher, since data from entire fleets of motor vehicles can be aggregated here.

The following attack would therefore be conceivable if, for example, authentic signals were not used in the vehicle: A malicious owner of one of the motor vehicles, which participates in data collection actions in the sense of further development of functions, manipulates bus data, which is further used in the backend for research and development. Development works with false data, makes false assumptions, is provoked to analyze "false scenarios".

Another scenario with implications for data protection: In certain scenarios, a security analysis (risk analysis) of the vehicle may reveal that, based on a weighing of risk and cost, encryption can or should be dispensed with, since an attack is limited locally to one vehicle and thus to only a small number of "victims". In the backend, on the other hand, data is collected from a large amount of different people, which makes an attack on the backend much more attractive. If the data is not already encrypted in the motor vehicle, it will be available in plain text in the aforementioned scenario at the latest in the data ingest (e.g., TLS in the backend) - or at a third-party provider.

The idea according to Fig. 1 first provides a public/private key pair for the system that generates and controls the campaigns (hereinafter referred to as "campaign system"). The public key is brought into the respective motor vehicle via a secure system in the form of a certificate and/or updated or stored there if necessary. The public key in the vehicle is later used to encrypt a campaign key. It is further provided that a campaign key (symmetric) is created in the vehicle based on campaign information and possibly a random value (if vehicle-specific encryption is desired), with which the recorded data is symmetrically encrypted and possibly signed (e.g., using the known combination AES-GCM). The key is encrypted using the public key of the campaign system and transmitted to the back end together with the recorded data via secure channels (optional). The campaign system decrypts the campaign key using the private campaign system key to decrypt the data.

The advantage is that data worth protecting, which is collected in the vehicle and processed in the backend, is cryptographically secured end to end.

The idea according to Fig. 2 is to generate (a) campaign-dependent key(s) when creating a data collection campaign and to distribute them both securely into the vehicle and the local computer system of the "source control device" (source for the measurement data) together with the configuration of a measurement campaign. This source control device (the control device that collects the measurement data and prepares it for output) can encrypt and/or sign using this/these key(s). The decryption and signature verification can only be performed by the campaign responsible central computer system.

Protected measurement data that is collected in the vehicle and processed in the backend can be cryptographically secured end-to-end.

The implementation examples thus show possible implementations of the process. Measurement data is configured in the backend (campaign management) and key material (key data of a cryptographic key) is created on a campaign-specific basis. This key material is transmitted confidentially and authentically with the configuration via campaign-independent encryption and/or TLS to the vehicle (e.g., to its gateway), authentically transmitted within its data network, and decrypted/verified in the local computer system of the target controller. The local computer system collects measurement data and encrypts and/or signs this measurement data using the campaign-specific key and forwards this encrypted measurement data back to the back end. The encrypted measurement data can be decrypted and verified at the endpoint / data interface by the developer or campaign operator.

Overall, the examples show how an end-to-end security concept for authentic or confidential measurement data from vehicles can be provided into a central computer system (so-called backend).

## Claims

1. Method for carrying out measurement campaigns by means of motor vehicles (12), the respective measurement campaign comprising configuration data (26) being received or generated by a stationary central computer system (11) for the measurement campaign, which configuration data (26) specify at least one measurement variable to be measured and/or at least one triggering condition for triggering a respective measurement (16) of measurement data (17) relating to the at least one measurement variable, and
the configuration data (26) are transmitted to the motor vehicles (12) by means of a predetermined forward channel (23), and the measurement data (17) measured by the motor vehicles (12) in accordance with the configuration data (26) are received from the motor vehicles (12) via a predetermined return channel (24),
**characterized in that**
a key derivation module (43) is operated by the central computer system (11), which key derivation module (43) generates a campaign-specific cryptographic key for the respective measurement campaign, and
control software (15) is provided in the motor vehicles (12), which is executed in a local computer system (14) of the respective motor vehicle (12) and which is set up:
- to carry out measurements (16) of measurement data (17) controlled by the configuration data (26) of the respective measurement campaign and
- to encrypt the measured measurement data (17) in the local computer system (14) by means of a predetermined symmetrical encryption method (45) and using the campaign-specific cryptographic key and
- to transmit the measurement data (17) to the central computer system in such encrypted form, and
the central computer system (11) receives the measurement data (17) in its encrypted form via the return channel (24) and decrypts it by means of the campaign-specific cryptographic key, and the decrypted measurement data (17) are made available at a data interface (25) for a predetermined campaign operator (18).

2. The method of claim 1, wherein the campaign-specific cryptographic key is generated using a random number generator (RNG).

3. Method according to one of the preceding claims, wherein the key derivation module (43) also uses vehicle-specific additional data when generating the campaign-specific cryptographic key (44), which makes the key (44) vehicle-specific.

4. Method according to one of the preceding claims, wherein the configuration data (26) that are exchanged between the central computer system (11) and the local computer system (14) of the respective motor vehicle (12) are additionally encrypted by means of a campaign-independent encryption (34), for which mutually corresponding encryption key data (35) are stored in both the central computer system (11) and the respective local computer system (14).

5. The method of any one of the preceding claims, wherein the return channel (24) comprises buffering in a mass storage device (19).

6. A system (10) for performing measurement campaigns using motor vehicles (12), comprising:
• a stationary central computer system (11) and
• a respective control software (15) for a respective local computer system (14) of the motor vehicles (12), wherein
the system (10) is adapted to perform a method according to any one of the preceding claims.

7. A stationary computer system (11) for carrying out measurement campaigns by means of motor vehicles (12), the central computer system (11) comprising a processor device, wherein the processor device is adapted to
∘ operate a key derivation module (43), which key derivation module (43) generates a campaign-specific cryptographic key (44) for a respective measurement campaign,
∘ transmit configuration data (26) of the respective measurement campaign to the motor vehicles (12) by means of a predetermined forward channel (23), wherein the configuration data (26) comprises the respective campaign-specific cryptographic key (44) for the respective motor vehicle (12),
∘ receive encrypted measurement data (17) measured by the motor vehicles (12) in accordance with the configuration data (26) from the motor vehicles (12) via a predetermined return channel (24), and
∘ decrypt the encrypted measurement data by means of a described symmetric encryption method using the campaign-specific cryptographic key.

8. Motor vehicle (12) for a system (10) according to claim 6, wherein in a local computer system (14) of the motor vehicle (12) a control software (15) is provided which is set up to be to be executed in the local computer system (14) and to execute measurements (16) of measurement data (17) controlled by configuration data (26) of a respective measurement campaign and to encrypt the measured measurement data (17) in the local computer system (14) by means of a predetermined symmetrical encryption method (45) using a campaign-specific cryptographic key and to transmit the encrypted measurement data (48) to a central computer system (11) external to the vehicle (12).

## Patentansprüche

1. Verfahren zum Durchführen von Messkampagnen mittels Kraftfahrzeugen (12), wobei die jeweilige Messkampagne Konfigurationsdaten (26) umfasst, die von einem stationären zentralen Computersystem (11) für die Messkampagne empfangen oder generiert werden, wobei die Konfigurationsdaten (26) mindestens eine zu messende Messgröße und/oder mindestens eine Auslösebedingung zum Auslösen einer jeweiligen Messung (16) von Messdaten (17) in Bezug auf die mindestens eine Messgröße spezifizieren, und
die Konfigurationsdaten (26) mittels eines vorbestimmten Vorwärtskanals (23) an die Kraftfahrzeuge (12) übertragen werden und die von den Kraftfahrzeugen (12) gemäß den Konfigurationsdaten (26) gemessenen Messdaten (17) über einen vorbestimmten Rückkanal (24) von den Kraftfahrzeugen (12) empfangen werden,
**dadurch gekennzeichnet, dass**
ein Schlüsselableitungsmodul (43) von dem zentralen Computersystem (11) betrieben wird, wobei das Schlüsselableitungsmodul (43) einen kampagnenspezifischen kryptografischen Schlüssel für die jeweilige Messkampagne erzeugt und
in den Kraftfahrzeugen (12) eine Steuerungssoftware (15) vorgesehen ist, die in einem lokalen Computersystem (14) des jeweiligen Kraftfahrzeugs (12) ausgeführt wird und die eingerichtet ist:
- um Messungen (16) von Messdaten (17) durchzuführen, die durch die Konfigurationsdaten (26) der jeweiligen Messkampagne gesteuert werden, und
- die gemessenen Messdaten (17) im lokalen Computersystem (14) mittels eines vorbestimmten symmetrischen Verschlüsselungsverfahrens (45) und unter Verwendung des kampagnenspezifischen kryptografischen Schlüssels zu verschlüsseln, und
- die Messdaten (17) in dieser verschlüsselten Form an das zentrale Computersystem zu übertragen, und
das zentrale Computersystem (11) die Messdaten (17) in ihrer verschlüsselten Form über den Rückkanal (24) empfängt und sie mittels des kampagnenspezifischen kryptografischen Schlüssels entschlüsselt und die entschlüsselten Messdaten (17) an einer Datenschnittstelle (25) für einen vorbestimmten Kampagnenbetreiber (18) zur Verfügung gestellt werden.

2. Verfahren nach Anspruch 1, wobei der kampagnenspezifische kryptografische Schlüssel unter Verwendung eines Zufallszahlengenerators (RNG) erzeugt wird.

3. Verfahren nach einem der vorhergehenden Ansprüche, wobei das Schlüsselableitungsmodul (43) beim Erzeugen des kampagnenspezifischen kryptografischen Schlüssels (44) auch fahrzeugspezifische Zusatzdaten verwendet, wodurch der Schlüssel (44) fahrzeugspezifisch wird.

4. Verfahren nach einem der vorhergehenden Ansprüche, wobei die Konfigurationsdaten (26), die zwischen dem zentralen Computersystem (11) und dem lokalen Computersystem (14) des jeweiligen Kraftfahrzeugs (12) ausgetauscht werden, zusätzlich mittels einer kampagnenunabhängigen Verschlüsselung (34) verschlüsselt werden, für die sowohl in dem zentralen Computersystem (11) als auch in dem jeweiligen lokalen Computersystem (14) einander entsprechende Verschlüsselungsschlüsseldaten (35) gespeichert sind.

5. Verfahren nach einem der vorhergehenden Ansprüche, wobei der Rückkanal (24) eine Zwischenspeicherung in einem Massenspeichergerät (19) umfasst.

6. System (10) zum Ausführen von Messkampagnen unter Verwendung von Kraftfahrzeugen (12), umfassend:
• ein stationäres zentrales Computersystem (11) und
• eine jeweilige Steuerungssoftware (15) für ein jeweiliges lokales Computersystem (14) der Kraftfahrzeuge (12), wobei
das System (10) dazu ausgelegt ist, ein Verfahren nach einem der vorhergehenden Ansprüche durchzuführen.

7. Stationäres Computersystem (11) zum Durchführen von Messkampagnen mittels Kraftfahrzeugen (12), wobei das zentrale Computersystem (11) eine Prozessorvorrichtung umfasst, wobei die Prozessorvorrichtung dazu ausgelegt ist,
o ein Schlüsselableitungsmodul (43) zu betreiben, wobei das Schlüsselableitungsmodul (43) einen kampagnenspezifischen kryptografischen Schlüssel (44) für eine jeweilige Messkampagne erzeugt,
∘ Konfigurationsdaten (26) der jeweiligen Messkampagne an die Kraftfahrzeuge (12) mittels eines vorbestimmten Vorwärtskanals (23) zu übertragen, wobei die Konfigurationsdaten (26) den jeweiligen kampagnenspezifischen kryptografischen Schlüssel (44) für das jeweilige Kraftfahrzeug (12) umfassen,
∘ verschlüsselte Messdaten (17), die von den Kraftfahrzeugen (12) gemäß den Konfigurationsdaten (26) gemessen wurden, von den Kraftfahrzeugen (12) über einen vorgegebenen Rückkanal (24) zu empfangen, und
o die verschlüsselten Messdaten mittels eines beschriebenen symmetrischen Verschlüsselungsverfahrens unter Verwendung des kampagnenspezifischen kryptografischen Schlüssels zu entschlüsseln.

8. Kraftfahrzeug (12) für ein System (10) nach Anspruch 6, wobei in einem lokalen Computersystem (14) des Kraftfahrzeugs (12) eine Steuerungssoftware (15) vorgesehen ist, die dazu eingerichtet ist, in dem lokalen Computersystem (14) ausgeführt zu werden und Messungen (16) von Messdaten (17) auszuführen, die durch Konfigurationsdaten (26) einer jeweiligen Messkampagne gesteuert werden, und die gemessenen Messdaten (17) in dem lokalen Computersystem (14) mittels eines vorbestimmten symmetrischen Verschlüsselungsverfahrens (45) unter Verwendung eines kampagnenspezifischen kryptografischen Schlüssels zu verschlüsseln und die verschlüsselten Messdaten (48) an ein zentrales, außerhalb des Fahrzeugs (12) befindliches Computersystem (11) zu übertragen.

## Revendications

1. Procédé pour réaliser des campagnes de mesure au moyen de véhicules automobiles (12), la campagne de mesure respective comprenant des données de configuration (26) qui sont reçues ou générées par un système informatique central fixe (11) pour la campagne de mesure, lesquelles données de configuration (26) spécifient au moins une variable de mesure à mesurer et/ou au moins une condition de déclenchement pour déclencher une mesure respective (16) de données de mesure (17) se rapportant à l'au moins une variable de mesure, et
les données de configuration (26) sont transmises aux véhicules automobiles (12) au moyen d'un canal aller prédéterminé (23), et les données de mesure (17) mesurées par les véhicules automobiles (12) conformément aux données de configuration (26) sont reçues des véhicules automobiles (12) via un canal retour prédéterminé (24),
**caractérisé en ce que**
un module de dérivation de clé (43) est exploité par le système informatique central (11), lequel module de dérivation de clé (43) génère une clé cryptographique spécifique à la campagne pour la campagne de mesure respective, et un logiciel de commande (15) est prévu dans les véhicules automobiles (12), lequel est exécuté dans un système informatique local (14) du véhicule automobile respectif (12), et lequel est configuré :
- pour effectuer des mesures (16) de données de mesure (17) commandées par les données de configuration (26) de la campagne de mesure respective et
- pour chiffrer les données de mesure mesurées (17) dans le système informatique local (14) au moyen d'un procédé de chiffrement symétrique prédéterminé (45) et à l'aide de la clé cryptographique spécifique à la campagne et
- pour transmettre les données de mesure (17) au système informatique central sous une telle forme chiffrée, et
le système informatique central (11) reçoit les données de mesure (17) sous leur forme chiffrée via le canal retour (24) et les déchiffre au moyen de la clé cryptographique spécifique à la campagne, et les données de mesure déchiffrées (17) sont mises à disposition sur une interface de données (25) pour un opérateur de campagne prédéterminé (18).

2. Procédé de la revendication 1, dans lequel la clé cryptographique spécifique à la campagne est générée à l'aide d'un générateur de nombres aléatoires (RNG).

3. Procédé selon l'une des revendications précédentes, dans lequel le module de dérivation de clé (43) utilise également des données supplémentaires spécifiques au véhicule lors de la génération de la clé cryptographique spécifique à la campagne (44), de sorte que la clé (44) devient spécifique au véhicule.

4. Procédé selon l'une des revendications précédentes, dans lequel les données de configuration (26) qui sont échangées entre le système informatique central (11) et le système informatique local (14) du véhicule automobile respectif (12) sont en outre chiffrées au moyen d'un chiffrement indépendant de la campagne (34), pour lequel des données de clé de chiffrement (35) mutuellement correspondantes sont stockées à la fois dans le système informatique central (11) et dans le système informatique local (14) respectif.

5. Procédé de l'une quelconque des revendications précédentes, dans lequel le canal retour (24) comprend une mise en mémoire tampon dans un dispositif de stockage de masse (19).

6. Système (10) destiné à réaliser des campagnes de mesure à l'aide de véhicules automobiles (12), comprenant :
• un système informatique central fixe (11) et
• un logiciel de commande respectif (15) pour un système informatique local respectif (14) des véhicules automobiles (12), dans lequel
le système (10) est adapté pour mettre en œuvre un procédé selon l'une quelconque des revendications précédentes.

7. Système informatique fixe (11) destiné à réaliser des campagnes de mesure au moyen de véhicules automobiles (12), le système informatique central (11) comprenant un dispositif processeur, dans lequel le dispositif processeur est adapté pour :
∘ faire fonctionner un module de dérivation de clé (43), lequel module de dérivation de clé (43) génère une clé cryptographique spécifique à la campagne (44) pour une campagne de mesure respective,
∘ transmettre des données de configuration (26) de la campagne de mesure respective aux véhicules automobiles (12) au moyen d'un canal aller prédéterminé (23), dans lesquelles les données de configuration (26) comprennent la clé cryptographique spécifique à la campagne respective (44) pour le véhicule automobile respectif (12),
∘ recevoir des données de mesure chiffrées (17) mesurées par les véhicules automobiles (12) conformément aux données de configuration (26) provenant des véhicules automobiles (12), via un canal retour prédéterminé (24), et
∘ **déchiffrer** les données de mesure chiffrées au moyen d'un procédé de chiffrement symétrique décrit, à l'aide de la clé cryptographique spécifique à la campagne.

8. Véhicule automobile (12) pour un système (10) selon la revendication 6, dans lequel, dans un système informatique local (14) du véhicule automobile (12), un logiciel de commande (15) est prévu, qui est configuré pour être exécuté dans le système informatique local (14) et pour exécuter des mesures (16) de données de mesure (17) commandées par des données de configuration (26) d'une campagne de mesure respective, et pour chiffrer les données de mesure mesurées (17) dans le système informatique local (14) au moyen d'un procédé de chiffrement symétrique prédéterminé (45), en l'aide d'une clé cryptographique spécifique à la campagne, et pour transmettre les données de mesure chiffrées (48) à un système informatique central (11) externe au véhicule automobile (12).
